# EUROPÄISCHE PATENTSCHRIFT

(11) **EP 1 310 902 B1**
(45) Veröffentlichungstag und Bekanntmachung des Hinweises auf die Patenterteilung: **29.12.2004**
(21) Anmeldenummer: 02023257.5
(22) Anmeldetag: 17.10.2002
(51) Int. Cl.: G06K 7/10

(54) **Verfahren zum Betrieb eines optischen Codelesers**
Method of operating a reader for optical codes
Procédé de mise en oeuvre d'un lecteur pour codes optiques

(30) Priorität: 07.11.2001 DE 10154679
(43) Veröffentlichungstag der Anmeldung: 14.05.2003
(73) Patentinhaber: SICK AG, 79183 Waldkirch (DE)
(72) Erfinder: Nopper, Richard, 79261 Gutach (DE)
(74) Vertreter: Ludewigt, Christoph

(56) Entgegenhaltungen:
- EP-A- 0 746 067
- US-A- 5 648 649
- TSANG W T: "HETEROSTRUCTURE SEMICONDUCTOR LASERS PREPARED BY MOLECULAR BEAM EPITAXY" IEEE JOURNAL OF QUANTUM ELECTRONICS, IEEE INC. NEW YORK, US, Bd. QE-20, Nr. 10, Oktober 1984 (1984-10), Seiten 1119-1132, XP000705658 ISSN: 0018-9197
- DAOQI YU; STERN M ; KATZ J: "Speckle noise in laser bar-code-scanner systems" APPL. OPT. (USA), Bd. 35, Nr. 19, 1. Juli 1996 (1996-07-01), Seiten 3687-3694, XP002236221

## Beschreibung

Die Erfindung betrifft ein Verfahren zum Betrieb eines Codelesers gemäß dem Oberbegriff des Anspruchs 1 sowie einen Codeleser zur Durchführung dieses Verfahrens.

Codeleser verwenden verschiedene Prinzipien zum Lesen eines Codes, der beispielsweise ein eindimensionaler Barcode oder zweidimensionaler Matixcode sein kann.

Bei Codelesem, die nach dem Scannerprinzip arbeiten, wird der Code gelesen, indem ein Lichtstrahl als sogenannter "Fahrstrahl" über das abzutastende Objekt, beispielsweise ein Etikett mit einem Barcode, bewegt wird. Wegen seiner guten Fokussierungs- und Intensitätseigenschaften wird als Lichtquelle typischerweise ein Laserstrahl eingesetzt. Das vom Objekt reflektierte und/oder remittierte Licht wird von einem Lichtempfänger empfangen und in elektronische Signale umgesetzt. Aus in den elektrischen Signalen enthaltenen Amplitudeninformationen wird die Barcodeinformation abgeleitet.

Zweidimensionale Codes werden zumeist mit Codelesern, die nach dem Kameraprinzip arbeiten, gelesen. Dabei wird das abzutastende Objekt mit einem im Querschnitt linienförmigen Lichtfächer oder einer flächigen Beleuchtung beleuchtet und das von dem beleuchteten Objekt reflektierte und/oder remittierte Licht auf ein ein- oder zweidimensionales Empfängerarray z. B. einen CCD- oder CMOS-Zeilenoder Matrixsensor, abgebildet. Durch Auswertung der Unterschiede der Empfangsamplituden verschiedener Empfangspixel kann die Codeinformation erhalten werden.

In allen Anwendungsfällen eines Codelesers wirkt sich eine fehlerhafte Amplitudeninformation als Störgröße bei der Erkennung der Codeinformation aus. Bei der Verwendung von Laserlicht tritt als zusätzliche Störgröße ein sogenanntes "Specklerauschen" auf, wie dies in der US 6,082,619 beschrieben ist. Wenn Laserlicht eine weiße Fläche beleuchtet, kann im Lichtfleck auf Grund der hohen Kohärenz des Lichts durch Interferenz der an verschiedenen Punkten der weißen Fläche gestreuten Lichtwellen ein sogenanntes Specklemuster entstehen. Das hierdurch verursachte Specklerauschen wirkt sich im Lichtempfänger als störendes Amplitudenrauschen aus.

In anderem Zusammenhang, nämlich bei der optischen Wiedergabe von Bildern im Projektionsverfahren auf der Basis von Lasern, ist aus der DE 199 24 519 A1 bekannt, ein sich bei der Abbildung ergebendes Specklemuster dadurch zu reduzieren, dass die Laserlichtquelle gepulst wird. Gepulstes Laserlicht hat eine geringere Kohärenzlänge, wodurch die Specklebildung vermindert wird.

Aus der US 5,648,649 ist ein Scanner bekannt, bei dem ein Laserspot über ein Target gescannt wird. Durch einen vibrierenden Spiegel wird eine zeitabhängige Phasenänderung am Ort des Targets erzeugt und bei Mittelung über die Zeit das Specklerauschen reduziert. In diesem Dokument ist es erwähnt, dass die Phasenänderung auch durch den Einsatz eines "self-pulsating laser" erreicht werden kann.

Eine "self-pulsating" Laserdiode ist beispielsweise aus der EP 0 746 067 A1 bekannt. Die dort beschriebene spezielle GRINSCH Laserdiode ist speziell zum Lesen von CD s geeignet. Eine spezielle Herstellung eines GRINSCH Lasers ist in der Veröffentlichung "Heterostructure Semiconductor Laser Prepared by Molecular Beam Epitaxy" aus IEEE Joumal of Quantum Electronics, Vol. QE-20, No.10, October 1984, Seite 1119 bis 1132, beschrieben.

Ausgehend von diesem Stand der Technik ist es Aufgabe der Erfindung, ein verbessertes Verfahren zum Betrieb eines Codelesers und einen entsprechenden Codeleser bereitzustellen, der insbesondere ein schnelleres Lesen des Codes erlaubt und eine größere Tiefenschärfe hat.

Diese Aufgabe wird durch ein Verfahren mit den Merkmalen des Anspruchs 1 und einem Codeleser mit den Merkmalen des Anspruchs 5 gelöst. Die unabhängigen Ansprüche sind gegen US 5,648,649 abgegrenzt.

Erfindungsgemäß wird das Laserlicht, das von einer Laserdiode ausgesandt wird und ein abzutastendes Objekt beleuchtet, amplitudenmoduliert, wobei die Laserdiode über einen Bereich variiert wird, der sich bis in einen Bereich erstreckt, in dem die Lichtleistungs-Strom-Kennlinie einen nichtlinearen Verlauf aufweist. Dadurch wird die Kohärenzlänge des Laserlichts bewusst und sehr effektiv reduziert, wodurch das reflektierte und/oder remittierte Licht in verminderter Weise Specklemuster erzeugt und ein Specklerauschen reduziert wird. Die grundsätzlich von den vorgenannten Bildprojektionsverfahren her bekannte Specklereduzierung durch Amplitudenmodulation wird mit der Erfindung verbessert und mit besonderem Vorteil bei Codelesern eingesetzt, denn dadurch können sehr schnelle Kameras (CCD- oder CMOS-Kameras) eingesetzt werden. In bisherigen Codeleser-Anwendungen war das Specklerauschen kein größeres Problem. So wird in der US 6,082,619 auch nicht näher auf das Specklerauschen eingegangen. Dies ist unter anderem auch darauf zurückzuführen, dass bisher die Beleuchtungszeit relativ lang war und während der Beleuchtungszeit eventuell entstehende Specklemuster bei Integration über die Zeit verschwinden oder zumindest in ihrer Auswirkung reduziert werden.

Da nun mit der Erfindung das Specklerauschen bei Codelesem reduzierbar ist, können auch sehr schnelle Kameras als Lichtempfänger eingesetzt werden, wodurch der Codeleser mit höherer Frequenz arbeiten kann.

Des Weiteren hat die Reduktion des Specklerauschens durch Amplitudenmodulation des Laserlichts den Vorteil, dass kleinere Aperturen einsetzbar sind, wodurch größere Schärfentiefen erreicht werden können, was für einen Codeleser von erheblichem Vorteil ist, da sich somit der Lesebereich vergrößert.

Bevorzugt beträgt die Modulationsfrequenz mehr als das etwa 5-fache einer Arbeitsfrequenz des Codelesers. Die Arbeitsfrequenz ist durch den Abtastvorgang des Objektes vorgegeben. Die Grenze dessen, wie klein die Modulationsfrequenz sein darf, ist dadurch gegeben, dass der Lichtempfänger des Codelesers nicht die Modulationsfrequenz messen darf. Bevorzugt ist die Modulationsfrequenz aber sehr viel größer, z. B. eine Größenordnung größer, als die Arbeitsfrequenz.

Als Modulationsfrequenz hat sich eine Frequenz > 100 MHz als vorteilhaft gezeigt.

Ein Codeleser nach der Erfindung weist neben einem Lichtsender zur Aussendung des Laserlichts und einem Lichtempfänger zum Empfang des Lichts eine Modulationsvorrichtung auf, mit der die Laserlichtquelle modulierbar ist, so dass amplitudenmoduliertes Licht aussendbar ist. Die Modulationsvorrichtung muss nicht räumlich getrennt von dem Lichtsender sein, sondern kann integraler Bestandteil einer Elektronik des Lichtsenders sein. Es wäre auch denkbar, eine Modulation der Laserdiode softwaremäßig zu integrieren, so dass durch Programmbefehle, die auf bereits vorhandene Einrichtungen wirken, eine Modulation des Laserlichts erfolgt. Unter dem Begriff Modulationsvorrichtung ist also nicht notwendigerweise eine separate Einheit zu verstehen.

Damit vom Lichtempfänger nicht die Modulationsfrequenz gemessen wird, sollte die Grenzfrequenz des Lichtempfängers vorteilhafterweise kleiner als die Modulationsfrequenz sein.

Als Laserlichtquelle wird eine Laserdiode eingesetzt, da diese relativ einfach durch Modulation des Diodenstroms variierbar ist.

Eine besonders effektive Reduktion des Specklerauschens ergibt sich, wenn beim Einsatz einer Laserdiode die Modulation bis in einen nichtlinearen Bereich der Laserdiodenkennlinie reicht.

Nach einer Ausführungsform der Erfindung ist ein im Querschnitt linienförmiger Lichtstrahlfächer vorgesehen, wodurch ein Code entlang einer Linie gut ausgeleuchtet wird, wie dies prinzipiell bereits aus der DE 100 09 493 A1 bekannt ist.

In diesem Fall ist es vorteilhaft, wenn der Lichtempfänger ein eindimensionales Empfängerarray umfasst, um die beleuchtete Linie vollständig auf das Empfängerarray abbilden zu können.

Mit dem erfindungsgemäßen Verfahren und Codeleser lassen sich nicht nur eindimensionale und zweidimensionale Barcodes vorteilhaft -lesen,. sondern prinzipiell auch andere Code, wie beispielsweise Farbcode.

Im Folgenden wird die Erfindung an Hand eines Ausführungsbeispiels unter Bezugnahme auf die Zeichnung im Einzelnen erläutert. In der Zeichnung zeigen:
- Fig. 1: eine schematische Darstellung einer Einrichtung zum Lesen von Codes;
- Fig. 2: eine typische Laserdiodenkennlinie.

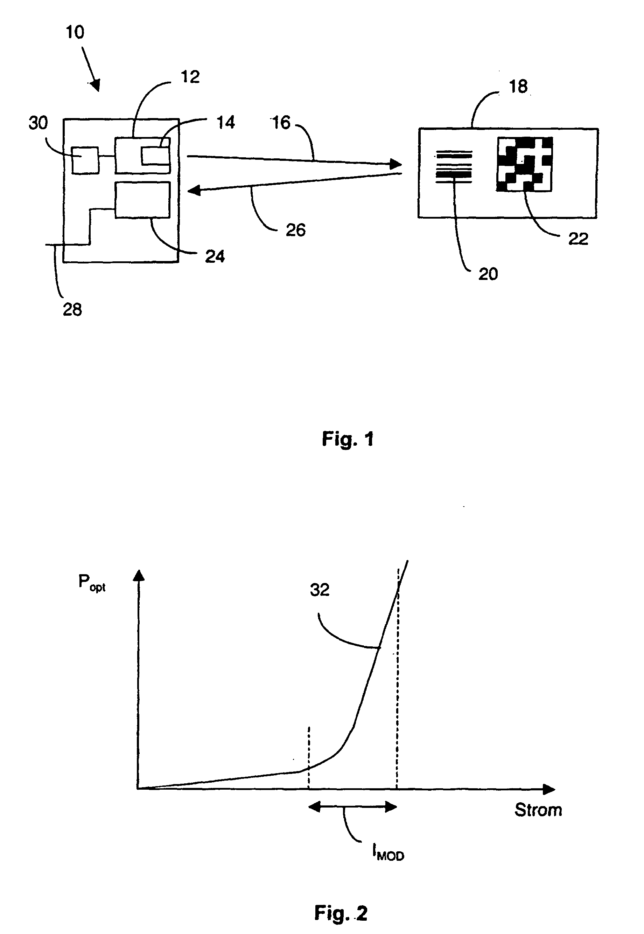

Fig. 1 zeigt eine Einrichtung zum Lesen eines Codes, die einen erfindungsgemäßen Codeleser 10 umfasst, der einen Lichtsender 12 mit einer Laserlichtquelle 14 zum Aussenden eines Laserlichtstrahls 16 aufweist. Mit dem Laserlichtstrahl 16 wird ein Objekt 18 beleuchtet, das einen Code 20 bzw. 22 trägt. Bei dem Code kann es sich um einen eindimensionalen Barcode, wie er bei dem Bezugszeichen 20 schematisch dargestellt ist oder um einen zweidimensionalen Code, wie er bei dem Bezugszeichen 22 schematisch dargestellt ist, handeln. Andere Codes, beispielsweise Farbcodes sind denkbar. Um mit dem Laserstrahl 16 den Code 20 oder 22 vollständig zu beleuchten kann der Codeleser 10 eine nicht näher dargestellte Lichtablenkvorrichtung aufweisen, so dass der Laserstrahl 16 über den Code 20 oder 22 gescannt werden kann.

Der Laserlichtstrahl 16 kann linienförmig auf das Objekt 18 fokussiert sein, so dass im Falle des eindimensionalen Codes 20 dieser über seine ganze Länge beleuchtet werden kann und im Falle des zweidimensionalen Codes 22, dieser mit dem linienförmigen Lichtstrahls 16 vollständig gescannt werden kann.

Der Codeleser 10 weist weiter einen Lichtempfänger 24 auf, mit dem das vom Objekt 18 reflektierte und/oder remittierte Licht 26 empfangen wird, wozu der Lichtempfänger 24 in der Regel eine geeignete Optik enthält. In dem Lichtempfänger 24 wird das empfangene Licht in ein elektronisches Signal umgewandelt und steht an einem Ausgang 28 zur weiteren Verarbeitung zur Verfügung.

Wenn der Laserstrahl 16 linienförmig auf das Objekt 18 fokussiert ist, weist der Lichtempfänger 24 vorzugsweise ein nicht näher dargestelltes eindimensionales Empfängerarray auf, um den linienförmig beleuchteten Bereich vollständig auf den Empfänger 24 abbilden zu können. Das Empfängerarray kann ein CCD- oder CMOS-Zeilensensor oder Matrixsensor sein.

In dem Codeleser 10 oder in einer an einem an dem Ausgang 28 angeschlossenen Auswerteeinheit kann eine entsprechende Auswertung des empfangenen Lichtes bzw. der elektronischen Signale zur Dekodierung des Codes 20 bzw. 22 vorgenommen werden.

Des Weiteren weist der Codeleser 10 erfindungsgemäß eine Modulationsvorrichtung 30 auf, mit der der Lichtsender 12 mit seiner Laserlichtquelle 14 modulierbar ist, so dass das ausgesandte Laserlicht 16 in gewünschter Weise eine Amplitudenmodulation aufweist.

Bevorzugt wird als modulierbare Laserlichtquelle 14 eine Laserdiode eingesetzt, die beispielsweise mit einer Modulationsfrequenz von etwa 100 MHz moduliert wird. Eine typische Arbeitsfrequenz für den Codeleser beträgt 20 KHz. Zumindest sollte die Modulationsfrequenz das etwa 5-fache der Arbeitsfrequenz des Codelesers betragen und bevorzugt sehr viel größer als die Arbeitsfrequenz sein. Der Arbeitsfrequenz angepasst sollte die Zeitkonstante des Lichtempfängers 24 sehr viel größer sein als die Modulationsfrequenz.

Die Modulation der Laserlichtquelle 14, die als Laserdiode ausgebildet ist, erfolgt beispielsweise dadurch, dass der Strom der Laserdiode, wie in Figur 2 anhand einer typischen Laserdiodenkennlinie 32 dargestellt, in einem Bereich I_{MOD} moduliert wird, so dass die Lichtleistung Pₒₚₜ entsprechend der Kennlinie 32 variiert. Der Bereich I_{MOD} ersteckt sich bis in einen Bereich hinein, in dem die Laserdiodenkennlinie 32 einen nicht linearen Verlauf aufweist.

Durch die Modulation wird die Kohärenzlänge des ausgesandten Laserlichts 16 reduziert und damit letztendlich das Specklerauschen reduziert.

Die Laserlichtquelle 14 kann Laserlicht unterschiedlichster Wellenlänge aussenden, dass vom infraroten über das sichtbare bis zum ultravioletten Bereich reichen kann.

## Patentansprüche

1. Verfahren zum Betrieb eines Codelesers (10) bei dem Laserlicht (16) von einer Laserdiode (14) ausgesandt wird und ein abzutastendes Objekt (18) beleuchtet wird und das reflektierte und/oder remittierte Licht (26) von einem Lichtempfänger (24) empfangen wird, und das Licht (16) amplitudenmoduliert ausgesandt wird, zur Reduktion eines Specklerauschens, **dadurch gekennzeichnet, dass** der Strom (I) für die Laserdiode (14) über einen Bereich (I_{MOD}) variiert wird, der ausgehend von höheren Strömen in dem Bereich stimulierter Emission, in dem das Laserlicht erzeugt wird, sich zu niedrigeren Strömen hin nur bis in einen Bereich erstreckt, in dem die Lichtleistungs-Strom-Kennlinie (32) einen nichtlinearen Verlauf aufweist.

2. Verfahren nach Anspruch 1 **dadurch gekennzeichnet, dass** die Modulationsfrequenz mehr als das 5-fache einer Arbeitsfrequenz des Codelesers beträgt.

3. Verfahren nach Anspruch 2 **dadurch gekennzeichnet, dass** die Modulationsfrequenz sehr viel größer, z. B. mehr als eine Größenordnung, als die Arbeitsfrequenz ist.

4. Verfahren nach einem der vorhergehenden Ansprüche, **dadurch gekennzeichnet, dass** die Modulationsfrequenz ≥ 100 MHz ist.

5. Codeleser zur Durchführung eines Verfahrens nach einem der vorhergehenden Ansprüche mit einem Lichtsender (12) mit einer Laserdiode (14) zum Aussenden eines Laserlichtstrahls (16), mit einem Lichtempfänger (24) zum Empfangen des reflektierten und/oder remittierten Lichts (26) zur Bereitstellung von elektrischen Signalen entsprechend dem empfangenen Licht und mit Mitteln zum Modulieren der Laserdiode (14) zur Aussendung amplitudenmodulierten Lichtes, **dadurch gekennzeichnet, dass** die Mittel gebildet sind durch eine Modulationsvorrichtung (30), mit der der Strom (I) für die Laserdiode (14) über einen Bereich (I_{MOD}) variierbar ist, der sich ausgehend von höheren Strömen in dem Bereich stimulierter Emission, in dem das Laserlicht erzeugt wird, zu niedrigeren Strömen hin nur bis in einen Bereich erstreckt, in dem die Lichtleistungs-Strom-Kennlinie (32) einen nichtlinearen Verlauf aufweist.

6. Codeleser nach Anspruch 5, **dadurch gekennzeichnet, dass** die obere Grenzfrequenz des Lichtempfängers (24) kleiner ist als die Modulationstiequenz, so dass der Lichtempfänger (24) nicht die Modulationsfrequenz messen kann.

7. Codeleser nach einem der vorhergehenden Ansprüche 5 oder 6, **dadurch gekennzeichnet, dass** der Laserlichtstrahl (16) der Laserdiode (14) linienförmig auf ein Objekt (18) fokussierbar ist.

8. Codeleser nach Anspruch 7, **dadurch gekennzeichnet, dass** der Lichtempfänger (24) ein ein- oder mehrdimensionales Empfängerarray umfasst.

## Claims

1. Method for operating a code reader (10) in which laser light (16) is transmitted from a laser diode (14) and an object (18) to be scanned is illuminated, and the reflected and/or remitted light (26) is received by a light receiver (24), and the light (16) is transmitted amplitude-modulated, in order to reduce the speckle noise **characterized in that** the current (I) for the laser diode (14) is varied over a range (I_{MOD}) which, proceeding from higher currents in the range of stimulated emission in which the laser light is generated, extends towards lower currents only into a range in which the light power/current characteristic curve (32) has a non-linear profile.

2. Method according to Claim 1, **characterized in that** the modulation frequency is more than 5 times the operating frequency of the code reader.

3. Method according to Claim 2, **characterized in that** the modulation frequency is very much greater than the operating frequency, for example more than one order of magnitude greater than it.

4. Method according to one of the preceding claims, **characterized in that** the modulation frequency is ≥ 100 MHz.

5. Code reader for carrying out the method according to one of the preceding claims having a light transmitter (12) with a laser diode (14) for transmitting a laser light beam (16), with a light receiver (24) for receiving the reflected and/or remitted light (26) in order to produce electrical signals corresponding to the received light, and with means for modulating the laser diode (14) for transmitting amplitude-modulated light, **characterized in that** the means are formed by a modulation apparatus (30), which can vary the current (I) for the laser diode (14) over a range (I_{MOD}) which, proceeding from higher currents in the range of stimulated emission in which the laser light is generated, extends towards lower currents only into a range in which the light power/current characteristic curve (32) has a non-linear profile.

6. Code reader according to Claim 5, **characterized in that** the upper cut-off frequency of the light receiver (24) is lower than the modulation frequency such that the light receiver (24) cannot measure the modulation frequency.

7. Code reader according to either of the preceding Claims 5 and 6, **characterized in that** the laser light beam (16) of the laser diode (14) can be focused onto an object (18) in the form of a line.

8. Code reader according to Claim 7, **characterized in that** the light receiver (24) has a one-dimensional or multidimensional receiver array.

## Revendications

1. Procédé de mise en oeuvre d'un lecteur de code (10) dans lequel : de la lumière laser (16) est émise par une diode laser (14), un objet à balayer (18) est éclairé, la lumière réfléchie et/ou réémise (26) est reçue par un récepteur de lumière (24), et la lumière (16) est émise sous forme modulée en amplitude en vue de réduire un chatoiement ; **caractérisé en ce qu'**on fait varier le courant (1) destiné à la diode laser (14) sur une zone (I_{MOD}) qui, en partant des courants supérieurs dans le domaine de l'émission stimulée dans lequel la lumière laser est produite, ne s'étend vers les courants inférieurs que jusqu'à une zone dans laquelle la courbe caractéristique "courant - puissance lumineuse" (32) a un cours non linéaire.

2. Procédé selon la revendication 1, **caractérisé en ce que** la fréquence de modulation est supérieure au quintuple d'une fréquence de travail du lecteur de code.

3. Procédé selon la revendication 2, **caractérisé en ce que** la fréquence de modulation est beaucoup plus grande que la fréquence de travail, par exemple supérieure à cette dernière de plus d'un ordre de grandeur.

4. Procédé selon l'une des revendications précédentes, **caractérisé en ce que** la fréquence de modulation est supérieure ou égale à 100 MHz.

5. Lecteur de code servant à mettre en oeuvre un procédé selon l'une des revendications précédentes et comportant : un émetteur de lumière (12) comportant une diode laser (14) servant à émettre un rayon de lumière laser (16) ; un récepteur de lumière (24) servant à recevoir la lumière réfléchie et/ou réémise (26) pour mettre à disposition des signaux électriques correspondant à la lumière reçue ; et des moyens servant à moduler la diode laser (14) afin d'émettre de la lumière modulée en amplitude ; **caractérisé en ce que** les moyens sont constitués par un dispositif de modulation (30) avec lequel on peut faire varier le courant (I) destiné à la diode laser (14) sur une zone (I_{MOD}) qui, en partant des courants élevés dans le domaine de l'émission stimulée dans lequel la lumière laser est produite, ne s'étend vers les courants inférieurs que jusque dans une zone dans laquelle la courbe caractéristique "courant - puissance lumineuse" (32) a un cours non linéaire.

6. Lecteur de code selon la revendication 5, **caractérisé en ce que** la fréquence limite supérieure du récepteur de lumière (24) est inférieure à la fréquence de modulation de sorte que le récepteur de lumière (24) ne puisse pas mesurer la fréquence de modulation.

7. Lecteur de code selon l'une des revendications précédentes 5 ou 6, **caractérisé en ce que** le rayon de lumière laser (16) de la diode laser (14) peut être focalisé de manière linéaire sur un objet (18).

8. Lecteur de code selon la revendication 7, **caractérisé en ce que** le récepteur de lumière (24) comprend une antenne de réception à une ou plusieurs dimensions.
